# EUROPÄISCHE PATENTSCHRIFT

(11) **EP 3 967 526 B1**
(45) Veröffentlichungstag und Bekanntmachung des Hinweises auf die Patenterteilung: **01.01.2025**
(21) Anmeldenummer: 21191453.6
(22) Anmeldetag: 16.08.2021
(51) Int. Cl.: B60C 23/04

(54) **VERFAHREN ZUM DRAHTLOSEN ÜBERTRAGEN VON INFORMATIONEN VON EINEM AN EINEM RAD ANGEORDNETEN RADMODUL ZU EINER EMPFANGSEINHEIT UND RADMODUL**
WHEEL MODULE AND METHOD FOR WIRELESS TRANSMISSION OF INFORMATION FROM A WHEEL MODULE ARRANGED ON A WHEEL TO A RECEIVING UNIT
PROCÉDÉ DE TRANSMISSION SANS FIL DES INFORMATIONS D'UN MODULE DE ROUE DISPOSÉ SUR UNE ROUE VERS UNE UNITÉ DE RÉCEPTION ET MODULE DE ROUE

(30) Priorität: 14.09.2020 DE 102020211492
(43) Veröffentlichungstag der Anmeldung: 16.03.2022
(73) Patentinhaber: Continental Reifen Deutschland GmbH, 30175 Hannover (DE)
(72) Erfinder: Cyllik, Adrian, 30419 Hannover (DE); Hanna, Jörg, 30419 Hannover (DE); Surisetti, Siva Sankar, 30419 Hannover (DE)
(74) Vertreter: Continental Corporation

(56) Entgegenhaltungen:
- EP-A2- 1 013 483
- DE-A1- 102007 040 340
- US-A- 6 087 930

## Beschreibung

Die vorliegende Erfindung bezieht sich auf ein Verfahren zum drahtlosen Übertragen von Informationen von einem an einem Rad angeordneten Radmodul eines Reifendrucküberwachungssystems eines Fahrzeugs zu einer Empfangseinheit. Ferner bezieht es sich auf ein Radmodul eines Reifendrucküberwachungssystems.

Ein Reifendrucküberwachungssystem ist beispielsweise aus der US 2006/0185429 A1 bekannt. Es weist typischerweise für jedes Rad ein Radmodul auf, das im Betrieb Parameter wie beispielsweise Druck, Temperatur und Beschleunigung misst und an ein zentrales Steuergerät sendet. Diese Messwerte werden zusammen mit weiteren relevanten Informationen wie beispielsweise einer individuellen Identifikationsnummer und einem Betriebszustand des Rades in regelmäßigen Abständen drahtlos per Funk, typischerweise bei einer Frequenz von etwa 433 MHz, an eine Empfangseinheit übertragen, die im Fahrzeug angeordnet ist. Die Nachrichten, mit denen diese Informationen übertragen werden, werden hier und im folgenden auch Datentelegramme genannt.

Aus der EP 1 013 483 A2 ist ein Verfahren bekannt, bei dem in manchen Betriebsmodi, wenn die Gefahr von Empfangsfehlern besteht, verkürzte Datentelegramme versendet werden, um die Wahrscheinlichkeit von Empfangsfehlern zu verringern.

Typischerweise werden die Radmodule über eine Batterie mit Energie versorgt, die in der Regel nicht getauscht oder aufgeladen werden kann. Aus diesem Grund wird es angestrebt, die energieintensive Übertragung von Datentelegrammen so sparsam wie möglich durchzuführen. Dies bedeutet insbesondere, dass möglichst kurze Datentelegramme übertragen werden.

Neuere Generationen von Reifendrucküberwachungssystemen ermöglichen die Bereitstellung weiterer Informationen, wie beispielsweise der Laufleistung und eines hinterlegten Solldrucks des Reifens sowie seiner Profiltiefe.

Es ist daher eine Aufgabe der vorliegenden Erfindung, ein Verfahren zur drahtlosen Übertragung von Informationen von einem an einem Rad angeordneten Radmodul mittels Datentelegrammen zu einer Empfangseinheit anzugeben, das die besonders energiesparende Übertragung möglichst vieler Informationen ermöglicht. Zudem soll das Verfahren sowohl für bereits auf dem Markt befindliche Reifendrucküberwachungssysteme einsetzbar sein als auch für derzeit in der Entwicklung befindliche Systeme, die die Bereitstellung weiterer Informationen ermöglichen.

Diese Aufgabe wird gelöst durch den Gegenstand der unabhängigen Ansprüche. Vorteilhafte Ausführungsformen und Weiterbildungen sind Gegenstand der Unteransprüche.

Gemäß einem Aspekt der Erfindung wird ein Verfahren zum drahtlosen Übertragen von Informationen von einem an einem Rad angeordneten Radmodul eines Reifendrucküberwachungssystems eines Fahrzeugs zu einer Empfangseinheit angegeben, wobei das Verfahren das Codieren der Informationen in Datentelegrammen umfasst, wobei jedes Datentelegramm eine Anzahl von Abschnitten für quasi-statische Informationen aufweist und in einem Zeitraum, in dem sich das Radmodul durchgängig in einem von mehreren definierten Betriebsmodi befindet, eine Mehrzahl von Datentelegrammen übertragen wird, wobei in den Abschnitten für quasi-statische Informationen übertragene Informationen jeweils mittels eines Multiplexerverfahrens ausgetauscht werden.

Als Betriebsmodi des Radmoduls können insbesondere definiert werden: Parkmodus (MP, das Radmodul befindet sich in Ruhe); Beginn einer Fahrt (MFB, das Radmodul befindet sich in Bewegung); Fahrt (MD, das Radmodul befindet sich in Bewegung); Interimsmodus (MI, das Radmodul befindet sich in Ruhe und verweilt im Interimsmodus, bevor es in den Parkmodus wechselt).

Unter quasi-statischen Informationen werden Informationen verstanden, die sich während eines Betriebszyklus des Fahrzeugs, beispielsweise während einer Fahrt, nicht oder nicht so wesentlich verändern, dass eine erneute Übermittlung der Informationen für den Betrieb des Reifendrucküberwachungssystems erforderlich wäre.

Bereits bei bestehenden Verfahren nach dem Stand der Technik weisen die Datentelegramme Abschnitte auf, in denen quasi-statische Informationen übertragen werden. Derartige quasi-statische Informationen können beispielsweise ein Batteriestatus sein oder ein Binärmarker zur Meldung eines entlüfteten Reifens (flat tire detection flag). Gemäß einem der Erfindung zu Grunde liegenden Gedanken kann der für derartige quasi-statische Informationen verwendete Speicherplatz besser ausgenutzt werden, wenn er während eines Betriebszyklus für wechselnde Informationen verwendet wird. Gemäß dem Multiplexeransatz können somit die sich in einem Betriebszyklus nicht oder nicht wesentlich verändernden quasi-statischen Informationen, die nicht mehrmals in jedem Betriebszyklus gesendet werden müssen, in aufeinanderfolgenden Datentelegrammen durchwechselnd versendet werden.

Dieses Vorgehen hat den Vorteil, dass in einem Betriebszyklus mehr Informationen übertragen werden können, ohne dass sich die Länge der Datentelegramme und damit ihr Energiebedarf ändert.

Als quasi-statische Informationen können insbesondere ein Solldruck und/oder eine Laufleistung und/oder eine Profiltiefe des Reifens und/oder ein Batteriestatus des Radmoduls und/oder eine Radlast und/oder eine zugehörige Radposition des Radmoduls übertragen werden.

Derartige Informationen werden bislang gar nicht oder nicht vollständig übertragen. Mittels des Verfahrens ist es möglich, sie zumindest in längeren Betriebszyklen alle zu übertragen, ohne dass dies zusätzliche Energie erfordert.

Gemäß einer Ausführungsform werden in einem der Abschnitte für quasi-statische Informationen des Datentelegramms Meta-Informationen über die Art der jeweils mittels des Multiplexerverfahrens übertragenen Informationen übertragen.

Dabei wird in einem der Abschnitte für quasi-statische Informationen, der beispielsweise die Größe von 2 Bits hat, die Information codiert, welchen Inhalt die in dem Datentelegrammen enthaltenen Abschnitte haben, in denen Informationen gemultiplext werden, ob diese Informationen also beispielsweise als Solldruck, als Laufleistung, als Profiltiefe, als Batteriestatus oder als Radlast gelesen werden sollen.

Gemäß einer Ausführungsform werden verschiedene Betriebsmodi des Radmoduls definiert und die Sendehäufigkeit der Datentelegramme abhängig vom aktuellen Betriebsmodus gewählt. Als Betriebsmodi kommen insbesondere ein Parkmodus, der Beginn einer Fahrt, die Fahrt an sich oder das Ende einer Fahrt in Betracht, das heißt die oben erwähnten Modi Parkmodus, Beginn einer Fahrt, Fahrt und Interimsmodus (Ende einer Fahrt). Sendehäufigkeiten können beispielsweise zwischen einem Datentelegramm alle 16 Sekunden und einem Datentelegramm alle 128 Sekunden oder einer Sendehäufigkeit dazwischen variieren, abhängig davon, welche Informationsdichte in dem aktuellen Betriebsmodus erforderlich ist.

Ferner können, wenn verschiedene Betriebsmodi des Radmoduls definiert sind, die Art der jeweils mittels des Multiplexer-Verfahrens übertragenen Informationen abhängig vom aktuellen Betriebsmodus gewählt werden. Beispielsweise kann festgelegt werden, dass bestimmte Informationen wie beispielsweise die Profiltiefe nur dann übertragen werden, wenn sich das Fahrzeug in Fahrt befindet und damit möglicherweise die Sendehäufigkeit erhöht ist.

Gemäß einer Ausführungsform enthalten die Datentelegramme Informationen darüber, in welchem Betriebsmodus sich das Radmodul aktuell befindet und ob das Datentelegramm als Multiplex-Telegramm oder als Standard-Datentelegramm verschickt wird. Diese Informationen können insbesondere in Form sogenannter Function Codes codiert werden, wobei für den Betriebsmodus beispielsweise die vier Betriebsmodi Parkmodus, Beginn einer Fahrt, Fahrt an sich sowie Ende einer Fahrt unterschieden werden können. Daneben enthält der Function Code die Informationen, ob ein Standard-Datentelegramm versendet wird oder ein bzw. mehrere Multiplex-Telegramme. Dabei entspricht das Standard-Datentelegramm dem aus dem Stand der Technik bekannten Datentelegramm und stellt die Rückwärtskompatibilität des Verfahrens für bestehende Radmodul und Steuergeräte sicher.

Gemäß einem Aspekt der Erfindung wird ein Computerprogrammprodukt angegeben, das Codeanweisungen enthält, um die Schritte des beschriebenen Verfahrens auszuführen, wenn die Codeanweisungen auf einer Recheneinheit ausgeführt werden.

Gemäß einem Aspekt der Erfindung wird ein Radmodul eines Reifendrucküberwachungssystems zur Anordnung an einem Rad angegeben, aufweisend zumindest einen Sensor zur Erfassung zumindest einer Messgröße sowie zumindest eine Steuereinheit mit einer Funkschnittstelle zur Kommunikation mittels Hochfrequenzwellen zwischen dem Radmodul und einem zentralen Steuergerät des Reifendrucküberwachungssystems, wobei die Steuereinheit eingerichtet ist zur Durchführung des beschriebenen Verfahrens. Dabei ist die Steuereinheit dadurch eingerichtet zur Durchführung des beschriebenen Verfahrens, dass sie in einem Speicher abgelegte Codeanweisungen enthält, um die Schritte des Verfahrens durchzuführen, wenn die Codeanweisungen auf der Steuereinheit ausgeführt werden.

Das zentrale Steuergerät kann dabei als im Fahrzeug fest verbautes Steuergerät ausgebildet sein, es kann jedoch auch ein mobiles Steuergerät sein, insbesondere ein Mobiltelefon oder Tablet. Es kann auch als stationäres Steuergerät ausgebildet sein, das beispielsweise an der Einfahrt zu einem Betriebshof oder zu einer Tankstelle oder an einem anderen Infrastrukturelement montiert ist. Ferner kann das zentrale Steuergerät auch als Kombination derartiger Einheiten ausgebildet sein.

Das Computerprogrammprodukt sowie das Radmodul weisen die bereits im Zusammenhang mit dem Verfahren beschriebenen Vorteile auf.

Ausführungsbeispiele werden im Folgenden anhand von Figuren näher erläutert. Die einzige Figur zeigt ein Fahrzeug mit Radmodulen eines Reifendrucküberwachungssystems gemäß einer Ausführungsform der Erfindung.

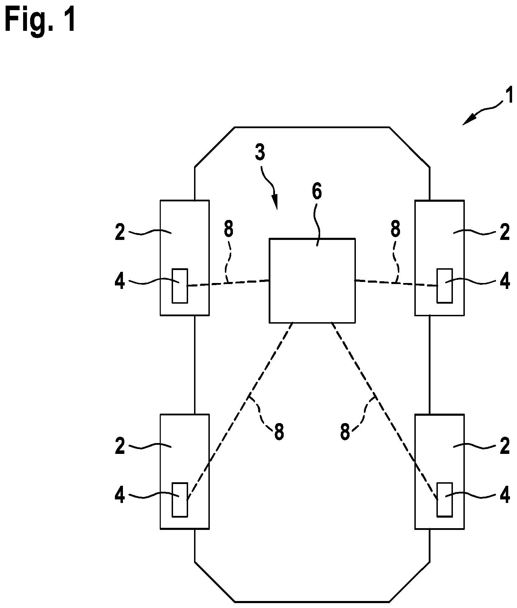

Das Fahrzeug 1 gemäß Figur 1 weist in der gezeigten Ausführungsform vier Räder 2 mit nicht näher gezeigten Reifen und Felgen auf. Die Erfindung kann jedoch auch bei Fahrzeugen mit mehr oder weniger Rädern 2 zum Einsatz kommen. Insbesondere ist sie sowohl bei Personenkraftwagen als auch bei Nutzfahrzeugen anwendbar.

Das Fahrzeug 1 weist darüber hinaus ein Reifendrucküberwachungssystem 3 auf, das mehrere Radmodule 4 sowie ein im Fahrzeug 1 angeordnetes zentrales Steuergerät 6 umfasst. Bei dem Steuergerät 6 kann es sich auch um ein Netzwerk aus mehreren Steuergeräten und/oder Empfangseinheiten handeln. Das Reifendrucküberwachungssystem 3 kann auch ein Reifendruckkontrollsystem zur aktiven Regelung des Reifendrucks umfassen.

Ein Radmodul 4 ist jeweils an jedem der Räder 2 des Fahrzeugs 1 angeordnet. Beispielsweise kann das Radmodul 4 jeweils am oder im Reifen oder an oder in der Felge angeordnet sein. Jedes Radmodul 4 weist Sensoren auf zur Erfassung des Reifendrucks, der Lufttemperatur sowie gegebenenfalls weiterer Größen. Die Sensordaten werden zusammen mit einer Identifizierungsnummer des Sensors und gegebenenfalls weiteren Informationen (beispielsweise über die Restlaufzeit einer Batterie des Radmoduls 4) als Datentelegramm an das zentrale Steuergerät 6 gesendet.

Jedes der Radmodule 4 kommuniziert dazu mit dem zentralen Steuergerät 6 über eine Kommunikationsverbindung 8 und weist dafür beispielsweise eine 433,92 MHz-Funkschnittstelle auf. In manchen Ländern wird hierfür eine abweichende Übertragungsfrequenz verwendet.

Somit weist jedes der Radmodule 4 und das zentrale Steuergerät 6 Einrichtungen zum Senden und/oder zum Empfangen von Hochfrequenzwellen auf. Insbesondere weisen die Radmodule 4 jeweils eine Einrichtung zum Senden und das zentrale Steuergerät 6 eine Einrichtung zum Empfangen von Hochfrequenzwellen auf.

Die Radmodule 4 sind typischerweise batteriebetrieben. Es ist jedoch auch denkbar, dass ihnen von außen elektrische Energie zugeführt wird oder sie elektrische Energie beispielsweise aus Bewegungen des Rads 2 erzeugen. In jedem Fall ist es vorteilhaft, die Kommunikation zwischen den Radmodulen 4 und dem Steuergerät 6 so energiesparend wie möglich zu gestalten.

Die Kommunikation zwischen den Radmodulen 4 und dem Steuergerät 6, insbesondere das Versenden von Sensordaten enthaltenden Informationen, erfolgt über sogenannte Datentelegramme.

Anhand der folgenden Tabelle 1 werden Aufbau und Inhalt eines herkömmlichen Datentelegramms erläutert.

**Tabelle 1**

| Bezeichnung | Byte | Format | Details |
|---|---|---|---|
| Preamble & Start der Nachricht | 1 | 8 bits | |
| Quasi-statischer Datenbereich (1) | 2 | 8 bits | |
| Quasi-statischer Datenbereich (2) | 3 | 2 bits | |
| | 76------ | | |
| Function Code FC (Betriebsmodus) | 3 | 6 bits | |
| | --543210 | | |
| Mess- und Betriebsdaten | 4-9 | 48 bits | |
| Ende der Nachricht | 10 | 8 bits | |

Das Datentelegramm gemäß diesem Beispiel umfasst 10 Byte. Es lässt sich in die Abschnitte Preamble & Start der Nachricht, quasi-statischer Datenbereich, Betriebsmodus, Mess- und Betriebsdaten und Ende der Nachricht einteilen.

Die typischerweise gemäß bekannten Verfahren versendeten Informationen Druck, Temperatur, Beschleunigung sind in den Bereichen Mess- und Betriebsdaten codiert, ebenso die Identifikationsnummer des Sensors bzw. Radmoduls.

In dem hier dargestellten Beispiel sind sogenannte Function Codes (FC) definiert, die den Betriebsmodus des Radmoduls 4 beschreiben. Dabei können beispielsweise die vier Betriebsmodi Parkmodus, Beginn einer Fahrt, Fahrt an sich sowie Ende einer Fahrt unterschieden werden. Die Function Codes sind in Bits 0 bis 5 von Byte 3 codiert.

In Byte 2 wird im Standardtelegram ein quasi-statischer Wert codiert, z.B. die Radposition, im dem sich das Radmodul befindet. In den Bits 6 und 7 von Byte 3 können z.B. Informationen über den Batteriestatus des Radmodules 4 hinterlegt sein. Diese Informationen sind quasi-statisch, da sie sich während eines Betriebszyklus des Radmoduls 4 nicht oder nicht wesentlich bzw. nur einmal ändern.

Die in diesen Abschnitten für quasi-statische Informationen codierten Informationen werden nun erfindungsgemäß mittels eines Multiplexerverfahrens ausgetauscht, wie im Folgenden anhand von Tabelle 2 beschrieben wird.

**Tabelle 2**

| Bezeichnung | Byte | Format | Beschreibung |
|---|---|---|---|
| Preamble & Start der Nachricht | 1 | 8 bits | |
| Multiplexed Byte | 2 | 8 bits | |
| Multiplexer | 3 | 2 bits | "00": M-Data 0 |
| | | | "01": M-Data 1 |
| | 76------ | | "10": M-Data 2 |
| | | | "11": M-Data 3 |
| Betriebsmodus | 3 | 6 bits | |
| | --543210 | | |
| Mess- und Betriebsdaten | 4-9 | 48 bits | |
| Ende der Nachricht | 10 | 8 bits | |

Im Abschnitt "multiplexed Byte" (Byte 2) werden weitere verfügbare, quasi-statische Informationen wie insbesondere ein Solldruck und/oder eine Laufleistung und/oder eine Profiltiefe des Reifens und/oder ein Batteriestatus des Radmoduls 4 und/oder eine Radlast codiert.

Den Function Codes werden vier weitere Function Codes hinzugefügt, um im Abschnitt "Multiplexer" (Bits 6 und 7 von Byte 3) Metainformationen über die Art der jeweils mittels des Multiplexer-Verfahrens übertragenen Informationen codieren zu können. Der Wert der Bits 6 und 7 von Byte 3 gibt somit an, welche Art von Informationen in Byte 2 aktuell übertragen werden.

Beim Lesen des Datentelegramms ist zunächst dem Abschnitt "Betriebsmodus" anhand des verwendeten Function Codes zu entnehmen, ob ein Standardtelegramm oder ein Multiplex-Telegramm vorliegt. Falls ein Multiplex-Telegramm vorliegt, kann dem Abschnitt "Multiplexer" die Information entnommen werden, welche Art von Information im Abschnitt "Multiplxed Byte" übertragen wird, ob dieses Byte demnach beispielsweise als Solldruck, Laufleistung, Profiltiefe des Reifens, Batteriestatus des Radmoduls 4 oder Radlast zu interpretieren ist.

In Verfahren nach dem Stand der Technik werden von theoretisch möglichen 64 Betriebsmodi nur dreißig verwendet. Die übrigen vierunddreißig Function Codes können demnach für das Multiplexer-Verfahren genutzt werden. Dabei ist vorteilhaft, dass sie von bestehenden Systemen ignoriert werden, so dass eine Rückwärtskompatibilität geben ist.

Tabelle 3 zeigt beispielhaft, welche Daten mit dem Verfahren in einem Betriebszyklus übertragen werden können.

**Tabelle 3**

| Zeitpunkt | Telegramm | FC | Multiplexer | Inhalt Multiplexer-Byte |
|---|---|---|---|---|
| 0 s | STD | MD | n/a | n/a (Radposition) |
| 128 s | MPLX | MD_MPLX0 | M-Data 0 | Laufleistung |
| 256 s | MPLX | MD_MPLX0 | M-Data 1 | Batteriestatus |
| 384 s | MPLX | MD_MPLX0 | M-Data 2 | Solldruck |
| 512 s | MPLX | MD_MPLX0 | M-Data 3 | Profiltiefe (1) |
| 640 s | MPLX | MD_MPLX1 | M-Data 0 | Profiltiefe (2) |
| 768 a | MPLX | MD_MPLX1 | M-Data 1 | Profiltiefe (3) |
| 896 s | MPLX | MD_MPLX1 | M-Data 2 | Radlast (1) |
| 1024 s | MPLX | MD_MPLX1 | M-Data 3 | Radlast (2) |
| 1152 s | STD | MD | n/a | n/a (Radposition) |
| 1280 s | MPLX | MD_MPLX0 | M-Data 0 | Laufleistung |

In dem dargestellten Beispiel befindet sich das Fahrzeug 1 bzw. das Radmodul 4 in Bewegung (Function Code "Mode Drive", MD) und es wird alle 128 s ein Datentelegramm übertragen. Je nach Bedarf können auch andere Sendehäufigkeiten gewählt werden. Zum Zeitpunkt 0 und zum Zeitpunkt 1152 s wird das StandardTelegramm übertragen, wie es auch bei Verfahren aus dem Stand der Technik verwendet wird. Dabei wird in dem sonst fürs Multiplexing verwendeten Byte die (statische) Radposition übertragen.

Zu den übrigen Zeitpunkten jedoch wird ein anderer Function Code verwendet, der anzeigt, dass das System unter Verwendung des Multiplex-Verfahrens sendet. Im "Multiplexer"-Abschnitt wird dann angegeben, welchen Inhalt der Abschnitt "Multiplexed Byte" hat. In diesem werden zu aufeinanderfolgenden Zeitpunkten die Laufleistung, der Batteriestatus in %, der Solldruck, die Profiltiefe und die Radlast codiert, so dass nach 1024 s all diese zur Verfügung stehenden Informationen versendet und dabei 8 Byte an zusätzlichen Daten übertragen wurden.

Ebenso wird in anderen Betriebsmodi des Fahrzeugs 1 vorgegangen.

Falls der Betriebsmodus innerhalb eines Zyklus von 1024 s wechselt, weil beispielsweise das Fahrzeug anhält, wird die rollierende Übertragung der Multiplexer-Inhalte unterbrochen. Sie wird dann im neuen Betriebsmodus wieder aufgenommen, wobei dann wieder im Zeitpunkt 0 begonnen wird. In einem solchen Fall liegen größere zeitliche Abstände zwischen den Übertragungen gleicher Inhalte. Da diese jedoch quasi-statisch sind und davon auszugehen ist, dass sich das Fahrzeug 1 irgendwann für ausreichend lange Zeit im selben Betriebsmodus befindet, um alle Inhalte rollierend übertragen zu können, ist dies ausreichend.

Falls das Datentelegramm mehr quasi-statische Abschnitte aufweist, beispielsweise weil es länger als 10 Byte ist und/oder manche Inhalte wie die Temperatur nicht oder nicht bei jeder Übertragung benötigt werden, können auch weitere Abschnitte für das Übertragen von Informationen mittels des Multiplexer-Verfahrens genutzt werden.

In dem in Tabelle 3 dargestellten Verfahren wurden nicht nur vier neue Function Codes definiert (jeweils MPLX0 für Parkmodus, Beginn einer Fahrt, Fahrt an sich und Ende einer Fahrt), sondern es wurde zumindest für den Betriebsmodus Fahrt noch der Function Code MD_MPLX1 definiert, wobei MD für Mode Drive steht. Dieser Function Code wird nur verwendet, wenn sich das das Radmodul 4 in Bewegung befindet, und erlaubt die Übertragung größerer Datenmengen (hier: Profiltiefe und Radlast). Ebenso könnte noch ein weiterer FC definiert werden, beispielsweise für den Beginn einer Fahrt.

## Patentansprüche

1. Verfahren zum drahtlosen Übertragen von Informationen von einem an einem Rad (2) angeordneten Radmodul (4) eines Reifendrucküberwachungssystems (3) eines Fahrzeugs (1) zu einer Empfangseinheit (6), wobei das Verfahren das Codieren der Informationen in Datentelegrammen umfasst, wobei jedes Datentelegramm eine Anzahl von Abschnitten für quasi-statische Informationen aufweist und in einem Zeitraum, in dem sich das Radmodul (4) durchgängig in einem von mehreren definierten Betriebsmodi befindet, eine Mehrzahl von Datentelegrammen derselben Länge übertragen wird, wobei in den Abschnitten für quasi-statische Informationen übertragene Informationen jeweils mittels eines Multiplexerverfahrens ausgetauscht werden.

2. Verfahren nach Anspruch 1, wobei als quasi-statische Informationen ein Solldruck und/oder eine Laufleistung und/oder eine Profiltiefe des Reifens (2) und/oder ein Batteriestatus des Radmoduls und/oder eine Radlast und/oder eine zugehörige Radposition des Radmoduls übertragen werden.

3. Verfahren nach Anspruch 1 oder 2, wobei in einem der Abschnitte für quasi-statische Informationen des Datentelegramms Metainformationen über die Art der jeweils mittels des Multiplexer-Verfahrens übertragenen Informationen übertragen werden.

4. Verfahren nach einem der Ansprüche 1 bis 3, wobei die Sendehäufigkeit der Datentelegramme abhängig vom aktuellen Betriebsmodus des Radmoduls (4) gewählt wird.

5. Verfahren nach einem der Ansprüche 1 bis 4, wobei die Art der jeweils mittels des Multiplexer-Verfahrens übertragenen Informationen abhängig vom aktuellen Betriebsmodus des Radmoduls (4) gewählt wird.

6. Verfahren nach einem der Ansprüche 1 bis 5, wobei die Datentelegramme Informationen darüber enthalten, in welchem Betriebsmodus sich das Radmodul (4) aktuell befindet und ob das Datentelegramm als Multiplex-Telegramm oder als Standard-Datentelegramm verschickt wird.

7. Computerprogrammprodukt, das Codeanweisungen enthält, um die Schritte eines Verfahrens nach einem der Ansprüche 1 bis 6 auszuführen, wenn die Codeanweisungen auf einer Recheneinheit ausgeführt werden.

8. Radmodul (4) eines Reifendrucküberwachungssystems (3) zur Anordnung an einem Rad eines Fahrzeugs (1), aufweisend
- zumindest einen Sensor zur Erfassung zumindest einer Messgröße;
- zumindest eine Steuereinheit mit einer Funkschnittstelle zur Kommunikation mittels Hochfrequenzwellen zwischen dem Radmodul und einem zentralen Steuergerät (6) des Reifendrucküberwachungssystems (3), wobei die Steuereinheit eingerichtet ist zur Durchführung eines Verfahrens nach einem der Ansprüche 1 bis 6.

## Claims

1. Method for wirelessly transmitting information from a wheel module (4), arranged on a wheel (2), of a tyre pressure monitoring system (3) of a vehicle (1) to a receiving unit (6), wherein the method comprises coding the information in data telegrams, each data telegram having a number of sections for quasi-static information, and a plurality of data telegrams of the same length being transmitted in a period of time in which the wheel module (4) is continuously in one of multiple defined operating modes, wherein information transmitted in the sections for quasi-static information is exchanged in each case by means of a multiplexer method.

2. Method according to Claim 1, wherein the quasi-static information transmitted is a target pressure and/or a mileage and/or a tread depth of the tyre (2) and/or a battery status of the wheel module and/or a wheel load and/or an associated wheel position of the wheel module.

3. Method according to Claim 1 or 2, wherein one of the sections for quasi-static information of the data telegram is used to transmit meta-information about the type of information transmitted in each case by means of the multiplexer method.

4. Method according to any one of Claims 1 to 3, wherein the frequency of transmission of the data telegrams is selected on the basis of the current operating mode of the wheel module (4).

5. Method according to any one of Claims 1 to 4, wherein the type of information transmitted in each case by means of the multiplexer method is selected on the basis of the current operating mode of the wheel module (4).

6. Method according to any one of Claims 1 to 5, wherein the data telegrams contain information about the operating mode that the wheel module (4) is currently in and whether the data telegram is sent as a multiplex telegram or as a standard data telegram.

7. Computer program product that contains code instructions, in order to carry out the steps of a method according to any one of Claims 1 to 6 when the code instructions are executed on a computing unit.

8. Wheel module (4) of a tyre pressure monitoring system (3) for arrangement on a wheel of a vehicle (1), comprising
- at least one sensor for acquiring at least one measured variable;
- at least one control unit having a radio interface for communication by means of radio-frequency waves between the wheel module and a central control unit (6) of the tyre pressure monitoring system (3), wherein the control unit is configured for carrying out a method according to any one of Claims 1 to 6.

## Revendications

1. Procédé de transmission sans fil d'informations d'un module de roue (4) disposé sur une roue (2) d'un système de surveillance de pression de pneu (3) d'un véhicule (1) à une unité de réception (6), le procédé comprenant le codage des informations dans des télégrammes de données, chaque télégramme de données comportant un certain nombre de sections d'informations quasi-statiques, et une pluralité de télégrammes de données ayant la même longueur étant transmis au cours d'une période pendant laquelle le module de roue (4) se trouve en permanence dans l'un de plusieurs modes de fonctionnement définis, les informations transmises dans les sections d'informations quasi-statiques étant respectivement échangées au moyen d'un procédé de multiplexage.

2. Procédé selon la revendication 1, dans lequel sont transmises en tant qu'informations quasi-statiques une pression de consigne et/ou un kilométrage et/ou une profondeur de sculpture du pneumatique (2) et/ou un état de batterie du module de roue et/ou une charge de roue et/ou une position de roue associée du module de roue.

3. Procédé selon la revendication 1 ou 2, dans lequel, dans l'une des sections d'informations quasi-statiques du télégramme de données, sont transmises des méta-informations concernant la nature des informations respectivement transmises au moyen du procédé de multiplexage.

4. Procédé selon l'une quelconque des revendications 1 à 3, dans lequel la fréquence d'émission des télégrammes de données est choisie en fonction du mode de fonctionnement actuel du module de roue (4).

5. Procédé selon l'une quelconque des revendications 1 à 4, dans lequel le type d'informations respectivement transmises au moyen du procédé de multiplexage est choisi en fonction du mode de fonctionnement actuel du module de roue (4).

6. Procédé selon l'une quelconque des revendications 1 à 5, dans lequel les télégrammes de données contiennent des informations indiquant le mode de fonctionnement dans lequel se trouve actuellement le module de roue (4) et si le télégramme de données est envoyé sous forme de télégramme multiplexé ou de télégramme de données standard.

7. Produit programme d'ordinateur contenant des instructions de code permettant d'exécuter les étapes d'un procédé selon l'une quelconque des revendications 1 à 6, lorsque les instructions de code sont exécutées sur une unité de calcul.

8. Module de roue (4) d'un système de surveillance de pression de pneu (3) destiné à être monté sur une roue d'un véhicule (1), comprenant
- au moins un capteur destiné à détecter au moins une grandeur de mesure ;
- au moins une unité de commande dotée d'une interface radio permettant de communiquer au moyen d'ondes à haute fréquence entre le module de roue et un appareil de commande central (6) du système de surveillance de pression de pneu (3), l'unité de commande étant conçue pour mettre en œuvre un procédé selon l'une quelconque des revendications 1 à 6.
